# EUROPÄISCHE PATENTSCHRIFT

(11) **EP 3 839 443 B1**
(45) Veröffentlichungstag und Bekanntmachung des Hinweises auf die Patenterteilung: **08.06.2022**
(21) Anmeldenummer: 19216601.5
(22) Anmeldetag: 16.12.2019
(51) Int. Cl.: G01D 5/347, G06N 3/08, G06N 5/00

(54) **GEBERVORRICHTUNG UND VERFAHREN ZUR BESTIMMUNG EINER KINEMATISCHEN GRÖSSE**
ENCODER DEVICE AND METHOD FOR DETERMINING A KINEMATIC VALUE
DISPOSITIF ÉMETTEUR ET PROCÉDÉ DE DÉTERMINATION D'UNE GRANDEUR CINÉMATIQUE

(43) Veröffentlichungstag der Anmeldung: 23.06.2021
(60) Teilanmeldung: 21210052.3
(73) Patentinhaber: SICK AG, 79183 Waldkirch (DE)
(72) Erfinder: Brugger, Dr. Simon, 79853 Lenzkirch (DE); Sellmer, Dr. Christian, 78166 Donaueschingen (DE); Hopp, Dr. David, 78166 Donaueschingen (DE); Thomae, Dominic, 78048 Villingen-Schwenningen (DE)
(74) Vertreter: Hehl, Ulrich

(56) Entgegenhaltungen:
- EP-A1- 0 841 539
- EP-A2- 0 586 999
- WO-A1-2017/072683
- WO-A2-2015/004472
- DE-A1- 4 409 892
- DE-A1-102006 042 725
- DE-A1-102017 220 788
- DE-A1-102018 001 781
- DE-A1-102018 005 008
- DE-A1-102018 005 652
- DE-A1-102018 006 946
- GB-A- 2 562 122

## Beschreibung

Die Erfindung betrifft eine Gebervorrichtung und ein Verfahren zur Bestimmung einer kinematischen Größe.

Bei Gebervorrichtungen werden lineare und rotatorische Systeme unterschieden. Ein Lineargeber bestimmt eine Verschiebung auf einer Achse. Ein Drehgeber, Drehwinkelsensor oder Encoder dient dagegen der Erfassung eines Drehwinkels oder einer Winkelstellung beispielsweise einer Welle eines Antriebselements. Dabei wird jeweils eine Maßverkörperung abgetastet, die längs der linearen Achse beziehungsweise an der Welle mitdrehend angebracht ist. Die Maßverkörperung erzeugt über die Relativbewegung eine Intensitätsmodulation in einem Abtastsensor. Oft gibt es mehr als eine abgetastete Codespur. So sind Sin/Cos-Geber verbreitet, die zwei analoge Ausgangssignale mit einem positionsabhängigen sinusförmigen beziehungsweise cosinusförmigen Verlauf zur Verfügung stellen. Die Phase und die Anzahl Perioden dieser Signale repräsentieren jeweils mit einem 90°-Versatz die gesuchte Position.

Für die zugrundeliegenden Sensorprinzipien werden verschiedene Technologien genutzt. Optische Drehgeber verwenden eine Codescheibe mit als Code dienenden Öffnungen oder Reflexmarken, die das Signal eines Lichtsenders modulieren, so dass ein in Transmission oder Reflexion angeordneter Lichtempfänger Positionssignale empfängt. Das Prinzip ist auch auf Lineargeber übertragbar. Bei einem magnetischen Geber wird beispielsweise die Veränderung des Magnetfelds bei Vorbeibewegen von codierenden Permanentmagneten mit einem Hallsensor detektiert. Weitere bekannte Systeme nutzen Maßverkörperungen und Abtastungen, die beispielsweise induktiv, kapazitiv oder nach noch anderen Modulations- und Abtastprinzipien arbeiten.

Gebervorrichtungen müssen zumindest für höhere Genauigkeitsanforderungen unterschiedliche umgebungsbedingte und mechanische Einflüsse berücksichtigen. Dazu sind aufwändige Kalibrierungen und Justierungen erforderlich, die überdies ein detailliertes Systemwissen erfordern. Da die Effekte auf die Messung nicht immer ausreichend bekannt sind, ist oft selbst mit einer Kalibration keine vollständige Korrektur möglich.

Die herkömmliche Auswertung beruht auf dem Ausnutzen mathematischer Zusammenhänge, wie etwa einer Arcustangens-Funktion im Falle von Sin/Cos-Codespuren. Je nach Codierung sind diese Zusammenhänge jedoch nicht so einfach abzuleiten und auszuwerten. Konkret bedarf es dann doch einer komplexen Systemarchitektur, um die unterschiedlichen Teilinformationen beispielsweise einer Absolutspur, einer Inkrementalspur zu gewinnen, zusammenzusetzen, zu interpolieren, zu korrigieren und dergleichen mehr.

Die GB 2562122A offenbart eine Trainingsmaschine zur Erzeugung von Trainingsdaten für ein überwachtes Lernen. An einem Baggerlager sind Linear- und Drehgeber montiert, die beispielsweise die Stellung der Schaufel bestimmen. Eine Kamera nimmt Bilder des Baggerladers auf und speichert dazu die mit den Linear- und Drehgebern gemessenen Stellungen. Damit wird ein neuronales Netz trainiert. Das trainierte Netz schätzt dann anhand von Kamerabildern die jeweiligen Stellungen, und deshalb kann auf die nur zum Training verwendeten Linear- und Drehgeber verzichtet werden.

Aus der DE 10 2018 005 652 ist eine Informationsverarbeitungsvorrichtung bekannt, die zum Training eines maschinellen Lernens Sensordaten und zugehörige vorgegebene Ermittlungsdaten erhält. Sie lernt daraus, später erfassten Sensordaten entsprechende Ermittlungsdaten zuzuordnen. Als Anwendungsbeispiele werden eine Werkstückkratzer-Prüfung für einen Roboter mittels Kamera sowie eine Motoranomalieprüfung mittels Richtmikrofon und Beschleunigungssensor genannt.

Die DE 10 2018 001 781 A1 befasst sich mit einem Robotersystem zum Aufnehmen eines Werkstücks unter Verwendung von Messdaten, die mittels maschinellen Lernens korrigiert sind. Die DE 10 2018 006 946 A1 betrifft eine Steuerung und eine maschinelle Lernvorrichtung, die eine Einlernposition optimieren. Die DE 10 2018 005 008 A1 beschreibt eine Steuervorrichtung und eine maschinelle Lernvorrichtung, die in der Lage sind, eine Spindelkollision zu detektieren.

Die DE 10 2006 042 725 A1 offenbart einen Joystick, an dessen Unterseite ein Magnet angeordnet ist, dessen Kippwinkel, Drehwinkel und Abstand zu einer ringförmigen Anordnung von Magnetsensoren bestimmt wird. In einer Ausführungsform wird ein neuronales Netz zur Auswertung der Sensorausgangssignale vorgeschlagen.

Die DE 10 2017 220 788 A1 betrifft ein Verfahren zum Trainieren eines zentralen Künstliche-Intelligenz-Moduls zur Bestimmung einer Fahrzeuggeschwindigkeit aus Eingangssignalen von Inertialsensoren, Umfeldsensoren und GNSS-Sensoren. In einer Trainingsphase wird dem KI-Modell zusätzlich zu diesen Eingangssignalen die auf Basis von Referenzsensoren ermittelte Geschwindigkeit bereitgestellt, wobei als Referenzsensoren vier hochpräzise Raddrehzahlsensoren und ein hochgenauer Unterboden-Ultraschallsensor zur Erfassung der Relativbewegung zwischen Fahrzeug und Straße vorgesehen sind. Nach dem abgeschlossenen Training bestimmt das KI-Modell aus den Eingangsdaten die Geschwindigkeit ohne Rückgriff auf die Referenzsensoren.

Es ist daher Aufgabe der Erfindung, die Auswertung einer Gebervorrichtung zu verbessern.

Diese Aufgabe wird durch eine Gebervorrichtung und ein Verfahren zur Bestimmung einer kinematischen Größe nach Anspruch 1 beziehungsweise 14 gelöst. Die Gebervorrichtung kann eine kinematische Größe einer Rotationsbewegung bestimmen. Die Gebervorrichtung wird auch als Drehgeber, Drehwinkelsensor oder Encoder, bei Einsatz in einem Servomotor auch als Motorfeedback-System bezeichnet. Die kinematische Größe umfasst vorzugsweise die Winkelstellung, kann aber auch eine Geschwindigkeit und/oder Beschleunigung sein, sei es als ergänzende zusätzliche Messgröße, als alternative Messgröße oder als Hilfsgröße für eine genauere Positionsbestimmung.

Eine Maßverkörperung ist mit dem einen Objekt und eine Abtasteinheit zur Erzeugung mindestens eines Abtastsignals durch Erfassung der in Relativbewegung befindlichen Maßverkörperung mit dem anderen Objekt verbunden. Die Maßverkörperung weist eine Strukturierung oder Codierung auf, die jeweilige Positionen charakterisiert. Dabei sind eine oder mehrere Absolut- und/oder Inkrementalspuren möglich. Mindestens eine Abtasteinheit erzeugt aus der Maßverkörperung mit der Relativbewegung mindestens ein Abtastsignal. Durch Abtasten mehrerer Spuren und/oder Abtastung mit einem Winkelversatz entstehen mehrere Abtastsignale. Dazu sind dann mehrere Abtasteinheiten vorgesehen, oder eine Abtasteinheit leistet mehrere oder alle Abtastungen. In dem jeweiligen Abtastsignal schlägt sich die Strukturierung oder Codierung der Maßverkörperung nieder. Das Sensorprinzip der Abtasteinheit und die zugehörigen Eigenschaften der Maßverkörperung kann optisch, magnetisch, induktiv oder kapazitiv sein oder auf noch einer anderen physikalischen Grundlage basieren.

Eine Steuer- und Auswertungseinheit: bestimmt die kinematische Größe aus dem mindestens einem Abtastsignal. Die Steuer- und Auswertungseinheit ist vorzugsweise Teil der Gebervorrichtung im Sinne einer darin verbauten Einheit. Es ist aber auch denkbar, Rechen- beziehungsweise Speicherkapazitäten von außen zur Verfügung zu stellen, insbesondere aus einer angeschlossenen Steuerung, einem Computer beliebiger Bauart oder einem Netzwerk, insbesondere einer Cloud.

Die Erfindung geht von dem Grundgedanken aus, die kinematische Größe mit Hilfe eines Verfahrens des maschinellen Lernens zu bestimmen. Dazu wird eine Bewertung des Abtastsignals mit einem Verfahren des maschinellen Lernens vorgenommen. Die Bewertung ist mit einer Vielzahl von Abtastsignalen trainiert, zu denen die jeweils zugehörige kinematische Größe vorgegeben wird ist. Bei simulierten Trainingsdaten ist die passende kinematische Größe als Vorgabe bekannt, ansonsten wird sie beispielsweise mit einem anderen Sensor gemessen. Ein derartiger Sensor kann sehr hochwertig und daher präzise sein, ein aufwändiges Messprinzip nutzen, oder es werden Hilfsmittel wie Kalibrierziele und dergleichen gegeben. Das alles wird nur während des Trainings benötigt, so dass Randbedingungen wie Kosten und Bauraum im Gegensatz zu der eigentlichen Gebervorrichtung und deren späterem Betrieb eine untergeordnete Rolle spielen.

Die Erfindung hat den Vorteil, dass eine flexible und in vielen Anwendungssituationen nutzbare Auswertung für eine Gebervorrichtung geschaffen wird. Die Auswertung funktioniert ohne vertieftes Systemwissen. Durch das maschinelle Lernen werden Toleranzen berücksichtigt, eine zusätzliche Kalibration oder Justage ist nicht erforderlich. Zugleich wird die Robustheit gegenüber beliebigen Einflüssen erhöht, die ebenso wie das System selbst nicht vollständig verstanden und beherrscht werden müssen. Dabei kann die Auswertung auf bestimmte Einflüsse durch gezielte Wahl von entsprechenden Trainingsdaten vorbereitet kann. Die Gebervorrichtung selbst kann vergleichsweise einfach und kostengünstig aufgebaut bleiben, indem das Training durch externe Rechen- und Speicherkapazitäten unterstützt oder übernommen wird.

Die Steuer- und Auswertungseinheit weist bevorzugt ein tiefes neuronales Netz auf. Als tiefes neuronales Netz wird ein künstliches neuronales Netz mit mehreren verborgenen Schichten bezeichnet. Tiefe neuronale Netze sind besonders leistungsfähig, gut trainierbar und ermöglichen eine verlässliche Bestimmung der kinematischen Größe mit geringem Messfehler. Alternativ zu tiefen neuronalen Netzen sind einfache neuronale Netze oder sonstige an sich bekannte Verfahren des maschinellen Lernens denkbar, wie Random Forest, K-Means und andere.

Die Architektur des tiefen neuronalen Netzes weist bevorzugt eine zumindest teilweise vorgegebene Architektur auf, insbesondere eine vorgegebene Anzahl Schichten und/oder Neuronen pro Schicht. Durch Vorgabe der Architektur sind während des Trainings allein die Gewichte der Verbindungen aufzufinden, wodurch sich die Komplexität verringert. Zudem ist durch Vorwissen über die konkret zu trainierende Familie von Gebervorrichtungen möglich, eine besonders geeignete Architektur zu wählen, die nach Kriterien wie Trainingsdauer, Anzahl erforderlicher Trainingsdatensätze und -wiederholungen und Genauigkeit optimiert ist. Alternativ kann das Training auch das Bestimmen der konkreten Architektur beinhalten. Das verlängert in aller Regel die Trainingsdauer, führt aber dafür zu besseren Ergebnissen, zumal wenn kein Vorwissen über eine optimale Architektur vorhanden ist.

Die Gebervorrichtung weist bevorzugt mehrere Abtasteinheiten mit unterschiedlichen Sensorprinzipien auf. Das gilt dann natürlich entsprechend für die Maßverkörperung, die mit den Abtasteinheiten geeignet zusammenwirkt und beispielsweise optische Spuren für eine optische Abtastung oder magnetische Spuren für einen Hallsensor aufweist. Die Möglichkeit des Vorhandenseins mehrerer Abtasteinheiten oder gleichwertig einer Abtasteinheit, die mehrere Abtastsignale erzeugen kann, wurde bereits diskutiert. In dieser Ausführungsform geht es darum, dass verschiedene Sensorprinzipien kombiniert werden, beispielsweise optische und magnetische Abtastung. Das vergrößert den Merkmalsraum und ermöglicht damit eine robustere und genauere Bestimmung der kinematischen Größe. Außerdem wird die Verlässlichkeit durch Diversität verbessert, und dies kann insbesondere für den Einsatz in der Sicherheitstechnik von Bedeutung sein. Herkömmlich müssen Abtastsignale unterschiedlicher Sensorprinzipien in aller Regel auch unterschiedlich ausgewertet werden. Für ein Verfahren des maschinellen Lernens handelt es sich um zusätzliche Abtastsignale, für die vorzugsweise weder im Training noch im Betrieb besondere Zusatzschritte erforderlich sind. Die Zusatzinformation durch Diversität wird dann vielmehr implizit ausgenutzt.

Mindestens eine Abtasteinheit ist bevorzugt für ein Sensorprinzip ausgebildet, das direkt eine Geschwindigkeits- und/oder Beschleunigungsinformation erzeugt. Diese kinematischen Größen lassen sich alternativ durch zeitliche Ableitung des Positionssignals gewinnen, aber dabei vergrößern sich die Messfehler, unter Umständen drastisch. Eine direkte Messung kann daher genauer sein und eröffnet jedenfalls einen neuen Merkmalsraum. Beispielsweise wird eine Geschwindigkeit durch ein induktives Sensorprinzip der Abtasteinheit gewonnen. Wiederum ist die Maßverkörperung geeignet für das Sensorprinzip der zugehörigen Abtasteinheit auszulegen. Die Messung einer Beschleunigung erfolgt beispielsweise durch ein Trägheitsprinzip (IMU, Inertial Measurement Unit).

Die Maßverkörperung ist bevorzugt für die Erzeugung eines nicht periodischen Musters ausgebildet. Das bezieht sich auf die relevante Messtrecke, die zwangsläufige Wiederholung nach 360° in einem Drehgeber wird in diesem Zusammenhang nicht als periodisch aufgefasst. Ein nicht periodisches Muster ist insbesondere nicht durch einen einfachen mathematischen Zusammenhang beschrieben wie ein Sinus oder Cosinus oder ein entsprechendes Rechtecksignal, und es besteht auch nicht aus regelmäßigen inkrementellen Strukturen. Mit maschinellem Lernen können auch komplexe und mehrdimensionale Muster ausgewertet werden, die mit einem analytischen Verfahren schwer oder gar nicht zu greifen wären. In gewisser Weise sind schon Toleranzen und Ungenauigkeiten der Maßverkörperung beziehungsweise der Abtastung, wie Flanken, Ripples und dergleichen, nicht periodische Muster in diesem Sinne. Bei einer herkömmlichen Auswertung würde dies lediglich zusätzliche Messfehler verursachen. Ein Verfahren des maschinellen Lernens nutzt vorzugsweise auch derartige Abweichungen, sofern sie wenigstens teilweise wiederkehrend sind. Vorzugsweise wird jedoch die Maßverkörperung geplant mit dem nicht periodischen Muster ausgebildet.

Die kinematische Größe umfasst eine Drehstellung der beiden Objekte zueinander. Eine solche Positionsinformation zu gewinnen ist die klassische Aufgabe einer Gebervorrichtung und wird vorzugsweise als die gesuchte kinematische Größe oder als eine der gesuchten kinematischen Größen bestimmt.

Die kinematische Größe umfasst vorzugsweise eine Geschwindigkeit und/oder eine Beschleunigung. Solche kinematischen Größen werden zusätzlich zu einer Position oder an deren Stelle erfasst. Es gibt also Ausführungsformen, die Position, Geschwindigkeit und Beschleunigung bestimmen, oder Paare oder einzelne dieser kinematischen Größen. Die Bestimmung von Geschwindigkeit oder Beschleunigung erfolgt durch Ableitung und/oder durch direkte Messung mit einem geeigneten Sensorprinzip. Es ist denkbar, die Geschwindigkeit beziehungsweise Beschleunigung nicht als eigene Zielgröße zu bestimmen, sondern um eine andere Zielgröße zu plausibilisieren oder genauer zu erfassen, beispielsweise durch Integration der Geschwindigkeit die Position zu messen.

Die Steuer- und Auswertungseinheit ist bevorzugt für eine Vorabbestimmung einer Grobschätzung der kinematischen Größe ausgebildet, insbesondere mit einem Verfahren ohne maschinelles Lernen. In dieser Ausführungsform wird die eigentliche Bewertung zum Bestimmen der kinematischen Größe durch das Verfahren des maschinellen Lernens vorab eingeschränkt und damit weniger komplex. Die Grobschätzung nutzt vorzugsweise herkömmliche Mittel ohne maschinelles Lernen, obwohl auch eine vorangestellte Grobschätzung mit maschinellen Lernen denkbar wäre. Dann wird dafür eine eigene Grobbestimmungseinheit mit einem Verfahren des maschinellen Lernens trainiert. Die Grobschätzung kann aus mindestens einer separaten Spur der Maßverkörperung oder aus der mindestens einen Spur erfolgen, die auch für die Bewertung zur genauen Bestimmung der kinematischen Größe verwendet wird.

Die Steuer- und Auswertungseinheit ist bevorzugt für eine Trainingsphase ausgebildet, in welcher die Gebervorrichtung verschiedenen bekannten Bewegungsszenarien mit bekannten Orts-, Geschwindigkeits- und/oder Beschleunigungsprofilen ausgesetzt ist. Durch die Bewegungsszenarien werden Abtastsignale gewonnen, zu denen die zugehörigen kinematischen Größen bekannt sind und so trainiert werden können. Die Bewegungsszenarien sollten die späteren Betriebsbedingungen repräsentieren, und durch geeignetes Ausgestalten und Auswählen von Bewegungsszenarien lässt sich das Training verbessern und die Trainingsdauer verkürzen.

Die Bewertung ist bevorzugt unter Variation von Umgebungsbedingungen und/oder mechanischen Einflüssen trainiert, insbesondere Variation von Temperatur, Feuchtigkeit, Schockbelastung und/oder Vibration. Dadurch wird die Bewertung im Betrieb robust gegen derartige Variationen. Dafür sind anders als bei herkömmlicher Auswertung keine besonderen Modelle oder dergleichen notwendig, aus denen geeignete Kompensationsberechnungen abgeleitet werden. Solange die Variationen beim Training zumindest einigermaßen die späteren Einflüsse repräsentieren, wird das Verfahren des maschinellen Lernens dies berücksichtigen. Repräsentativ werden die Bedingungen auf sehr einfache Weise, indem das Training direkt am späteren Einsatzort erfolgt. Alternativ sind auch künstliche Variationen denkbar, sei es tatsächlich durch Heizen und Befeuchten beziehungsweise Stöße oder durch eine Simulation von Heiz- und Feuchtigkeitseinflüssen und Bewegungen, wobei letzteres doch wieder zumindest ein gewisses Systemwissen erfordert.

Die Bewegung ist eine Drehbewegung, wobei die Bewertung unter Variation von Exzentrizität, Höhenschlag und/oder verschiedenen Drehlagerungen trainiert ist. Im Falle von Drehgebern gibt es spezifische Einflussgrößen, von denen die wichtigsten beispielhaft aufgezählt sind. Eine Lagerung ermöglicht die Drehbewegung der beiden Objekte zueinander. Dadurch ergeben sich dann Variationen in Exzentrizität, Höhenschlag und individuellen Eigenschaften der Lagerung selbst, beispielsweise des verwendeten Kugellagers. Auch diese Einflüsse wird die Bewertung mittels eines Verfahrens des maschinellen Lernens berücksichtigen.

Erneut lässt sich dies besonders einfach durch individuelles Training der konkreten montierten Gebervorrichtung erreichen.

Der Steuer- und Auswertungseinheit ist bevorzugt eine teiltrainierte Bewertung vorgegeben, die für eine Klasse von Gebervorrichtungen trainiert ist. Gerade die oben genannten allgemeinen Einflüsse durch die Umgebung, wie Temperatur, Feuchtigkeit, Schock oder Vibration, wirken sich auf untereinander ähnliche Gebervorrichtungen auch ähnlich aus. Dadurch kann zumindest ein Teil des Trainings allgemein erfolgen. Einer bestimmten Gebervorrichtung wird dieses Trainingsergebnis aufgespielt, beispielsweise werden die Gewichte eines neuronalen Netzes entsprechend vorbesetzt. Unter Umständen kann die Gebervorrichtung mit solchen allgemein trainierten Verfahren des maschinellen Lernens schon ohne weiteres Training arbeiten.

Die Steuer- und Auswertungseinheit ist bevorzugt dafür ausgebildet, die teiltrainierte Bewertung individuell nachzutrainieren. Manche Einflüsse sind nicht allgemein, nicht einmal unter baugleichen Gebervorrichtungen. Solche Unterschiede lassen sich durch ein individuelles Training berücksichtigen. Das kann in der Endfertigung geschehen, wo für kontrolliere Bedingungen und präzise Vorgaben der richtigen kinematischen Größe durch ein überlegenes Sensorsystem im Rahmen des Trainings gesorgt werden kann. Ebenso denkbar ist ein Training in der montierten Position beziehungsweise vor Ort in der späteren Anwendungssituation.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines Drehgebers;
- Fig. 2: eine schematische Darstellung einer Gebervorrichtung zur Längspositionsmessung;
- Fig. 3: eine Darstellung eines beispielhaften Abtastsignals eines Drehgebers;
- Fig. 4: eine Darstellung von mehreren überlagerten Abtastsignalen mehrerer Abtasteinheiten eines Drehgebers;
- Fig. 5: eine Darstellung einer Winkelschätzung eines neuronalen Netzes für einen Drehgeber;
- Fig. 6: eine Darstellung des Winkelfehlers der Winkelschätzung gemäß Figur 5;
- Fig. 7: eine Darstellung einer Winkelschätzung ähnlich Figur 5, nun mit längerem Training des neuronalen Netzes;
- Fig. 8: eine Darstellung des Winkelfehlers der Winkelschätzung gemäß Figur 7;
- Fig. 9: eine schematische Darstellung eines neuronalen Netzes;
- Fig. 10: eine schematische Darstellung eines neuronalen Netzes mit nicht vorab festgelegter Architektur; und
- Fig. 11: eine schematische Darstellung eines idealen und eines realen Abtastsignals.

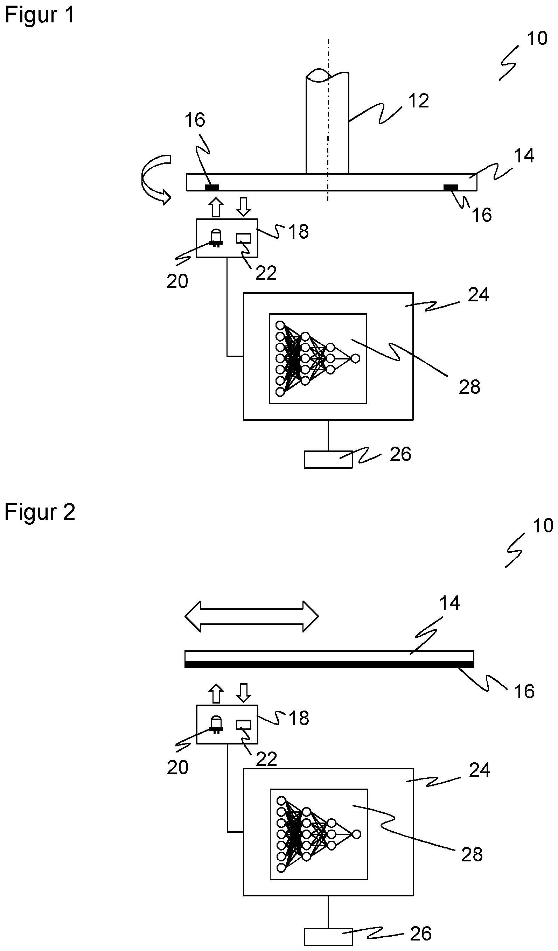

Figur 1 zeigt eine schematische Darstellung einer Gebervorrichtung 10, die als Drehgeber ausgebildet ist. Die Funktion der Gebervorrichtung 10 ist, kinematische Größen der Drehbewegung einer Welle 12 zu bestimmen, insbesondere deren jeweilige Drehstellung. In der dargestellten Ausführungsform als optischer Encoder weist die Gebervorrichtung 10 eine mit der Welle 12 rotierende Codescheibe als Maßverkörperung 14 auf, und auf der Maßverkörperung 14 befindet sich eine Codespur 16. Die Codespur 16 kann sehr einfach sein, wie im Falle eines regelmäßigen inkrementellen Musters oder Zahnrads, oder jeden denkbaren auch sehr komplexen Code enthalten.

Eine Abtasteinheit 18 mit Lichtquelle 20 und Lichtempfänger 22 tastet die Codespur 16 ab und erzeugt ein entsprechendes Abtastsignal. Um eine hohe Messgenauigkeit zu erreichen, sollte das Abtastsignal eine möglichst hohe Auflösung haben und die Unterscheidung vieler Schritte ermöglichen. In der Praxis sind üblicherweise mehrere Abtasteinheiten 18 vorgesehen, die mehrere Codespuren 16 und/oder eine jeweilige Codespur 16 in unterschiedlichem Winkelversatz abtasten. Es ist auch möglich, dass bereits eine Abtasteinheit 18 mehrere Codespuren 16 erfasst, beispielsweise mit einem Lichtempfänger 22 mit mehreren Lichtempfangselementen. Somit können auf unterschiedliche Weise statt nur eines Abtastsignals mehrere Abtastsignale erzeugt werden. Eine mechanische Umdrehung von 360° kann mehrere ähnliche Perioden gleicher oder unterschiedlicher Länge umfassen. Alternativ sind zur besseren Unterscheidbarkeit sektorweise oder über die gesamten 360° keine sich wiederholenden Abschnitte vorgesehen, sei es bereits innerhalb einer einzelnen Codespur oder zumindest in deren Gesamtheit.

Eine Steuer- und Auswertungseinheit 24 bewertet die Abtastsignale, um die gewünschten Winkelsignale und/oder sonstigen kinematischen Größen der Drehbewegung der Welle 12 zu bestimmen. Die Winkelstellung, -geschwindigkeit und/oderbeschleunigung wird an einem Ausgang 26 bereitgestellt. Diese Bewertung erfolgt durch Mustererkennung in den Abtastsignalen mit einem Verfahren des maschinellen Lernens, das stellvertretend durch ein tiefes neuronales Netz 28 dargestellt ist. Alternative Verfahren des maschinellen Lernens sind denkbar, wie Random Forest, aber die weitere Beschreibung erfolgt am Beispiel des neuronalen Netzes 28.

Die Steuer- und Auswertungseinheit 24 kann zumindest teilweise außerhalb der Gebervorrichtung 10 implementiert sein, um zusätzliche Rechen- und Speicherkapazität zur Verfügung zu stellen, beispielsweise von einem angeschlossenen Rechner oder aus einer Cloud. Das gilt insbesondere für die besonders daten- und rechenintensive Trainingsphase für das neuronale Netz 28.

Die Darstellung der Gebervorrichtung 10 in Figur 1 ist sehr schematisch. Für die Erfindung ist von untergeordneter Bedeutung, wie die Abtastsignale konkret erzeugt werden. Daher ist die Ausgestaltung der Abtasteinheit 18 in Figur 1 sehr einfach gehalten, die beispielsweise ebenso im Durchlichtverfahren statt im Auflichtverfahren arbeiten könnte. Ein weiteres alternatives Beispiel ist eine magnetische Maßverkörperung 14 mit einer Abtasteinheit 18, die mindestens einen Hall-Sensor aufweist. Andere physikalische Messprinzipien mit entsprechenden Kombinationen von Maßverkörperung 14 und passender Abtasteinheit 18 sind möglich, insbesondere induktive oder kapazitive Erfassung. In einer Ausführungsform werden mehrere Sensorprinzipien miteinander kombiniert, beispielsweise optische und magnetische Codespuren 16 auf einer oder mehreren Maßverkörperungen 14 mit entsprechenden Abtasteinheiten 18. Von der Erfindung sind absolute wie inkrementale Gebervorrichtungen 10 umfasst, und die Gebervorrichtung 10 kann beliebige Schnittstellen und Ausgabeformate aufweisen.

Figur 2 zeigt eine schematische Darstellung einer Gebervorrichtung 10, die nicht unter den Schutzbereich der Ansprüche fällt und die nun für eine lineare Bewegung statt für eine Drehbewegung ausgebildet ist. Die Maßverkörperung 14 ist in dieser Ausführungsform langgestreckt, und die Abtasteinheit 18 bewegt sich translatorisch in Richtung der Längserstreckung. Damit werden als kinematische Größen eine Längsposition und/oder eine Geschwindigkeit beziehungsweise Beschleunigung in Längsrichtung erfasst. Die Codespur 16 kann eine Periodizität beispielsweise mit Wiederholung nach einem Meter aufweisen oder, zumindest im Zusammenspiel mehrerer Codespuren 16, überall verschieden sein.

Zwischen einem rotatorischen System nach Figur 1 und einem translatorischen oder linearen System nach Figur 2 wird im Folgenden nicht mehr unterschieden. Es entsteht jeweils ein Abtastsignal, das durch ein Verfahren des maschinellen Lernens bewertet wird, um die gesuchten kinematischen Größen zu bestimmen.

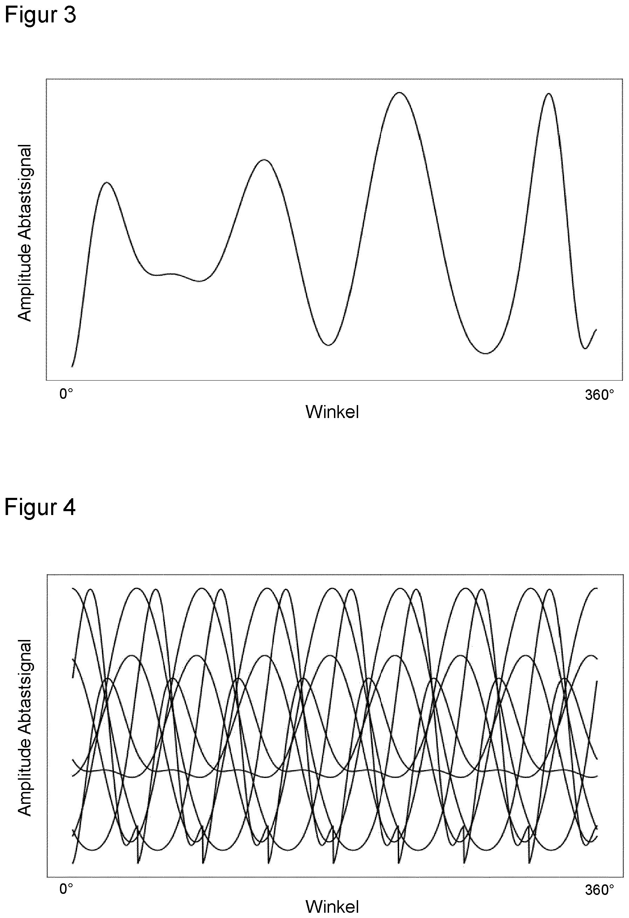

Figur 3 zeigt ein Abtastsignal einer als Drehgeber ausgebildeten Gebervorrichtung 10 über eine Drehung von 360°. Je größer die Anzahl der Datenpunkte und die Genauigkeit der Amplitudenauflösung, beispielsweise zehn Bit, desto genauer kann der Winkel bestimmt werden, aber desto höher ist auch der Hardware- und Auswertungsaufwand.

Durch entsprechende Auslegung der Maßverkörperung 14 beziehungsweise der Codespur 16 wird ein Abtastsignal erzeugt, das im Gegensatz zu einer einfachen mathematischen Funktion, wie einem Sinus oder Cosinus, keine periodischen Wiederholungen aufweist und somit möglichst viele Anhaltspunkte bietet, auf den Winkel rückzuschließen. Der konkrete Verlauf des Abtastsignals ist jedoch rein beispielhaft.

Figur 4 zeigt eine Überlagerung von mehreren zueinander winkelversetzten Abtastsignalen entsprechend demjenigen der Figur 3. Die jeweiligen Abtastwerte bei einem jeweiligen festen Winkel lassen einen Rückschluss auf den zugehörigen Winkel zu, wobei dies bei geschickter Auslegung der Abtastsignale selbst sowie des gegenseitigen Versatzes auch eindeutig ist.

Nun könnten mit einer deterministischen Auswertung diese Zuordnungen analytisch oder mit einer Lookup-Tabelle rekonstruiert werden. Das bedeutet aber Aufwand, um die mathematischen Zusammenhänge zu erfassen oder die Lookup-Tabelle aufzustellen. Für jede Auslegung der Gebervorrichtung 10 sind dazu gesonderte Überlegungen anzustellen, welche analytischen Verfahren oder Lookup-Tabellen eine angemessene Lösung bieten. Außerdem ist die Auswertung anfällig für Variationen der Abtastsignale, die im realen Betrieb immer auftreten, und die Auswirkungen sind unüberschaubar und jedenfalls nur durch intensive Untersuchung der jeweiligen Auslegung der Gebervorrichtung 10 in den Griff zu bekommen.

Erfindungsgemäß wird deshalb ein Verfahren des maschinellen Lernens eingesetzt, das wie schon erläutert am Beispiel des neuronalen Netzes 28 beschrieben wird. Für das neuronale Netz 28 spielt keine Rolle, mit welchem Sensorprinzip die Abtastsignale entstanden sind und ob die jeweiligen Muster in deren Verlauf dem Design, Abweichungen der individuellen Gebervorrichtung 10 von diesem Design oder aktuellen Einflüssen geschuldet sind. Vielmehr wird das neuronale Netz 28 diejenigen Abtastsignale einlernen, die ihm während des Trainings angeboten werden, und nach diesem Vorbild im späteren Betrieb die kinematischen Größen auffinden. Diese Art des Trainings und der Bewertung ist universell über verschiedene Gebervorrichtungen 10 derselben Familie oder sogar verschiedener Bauarten möglich und robust. Dabei können individuelle Eigenschaften einer jeweiligen Gebervorrichtung 10 durch Training mit deren Abtastsignalen sehr wohl berücksichtigt werden, und auch die Einflüsse des Betriebsortes in der Zielanwendung lassen sich durch zumindest teilweises Training vor Ort in der Montageposition einbeziehen.

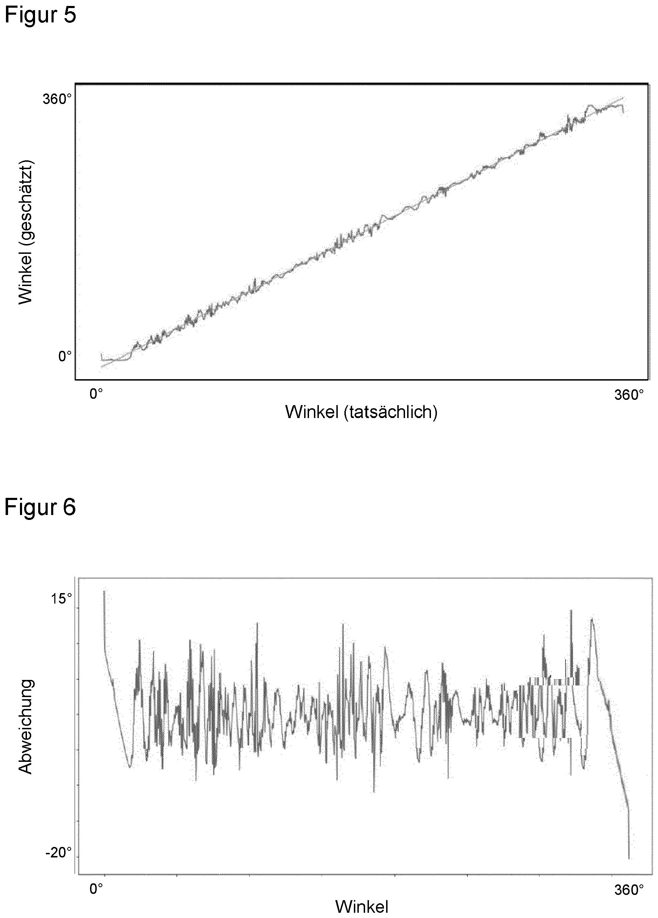

Figur 5 zeigt eine Bewertung von mehreren Abtastsignalen durch ein neuronales Netz 28, also den von dem neuronalen Netz 28 bestimmten Winkel in Abhängigkeit von dem tatsächlichen Winkel. Figur 6 zeigt den zugehörigen Winkelfehler im Vergleich zu einer idealen Winkelmessung. Das neuronale Netz 28 wurde mit 50.000 Wiederholungen eingelernt. Die zugrunde gelegten Abtastsignale entsprechen prinzipiell denjenigen der Figur 4, konkret wurden aber Abtastsignale eines anderen beispielhaften Systems verwendet.

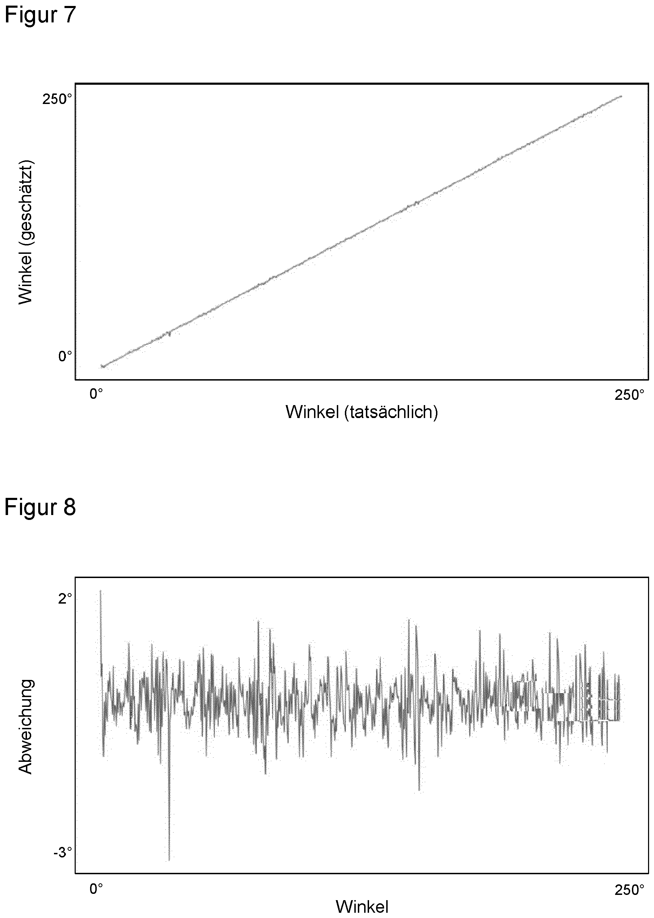

Die Figuren 7 und 8 zeigen zum Vergleich die Bewertung des neuronalen Netzes 28 beziehungsweise den Winkelfehler nach Training mit 100.000 Wiederholungen, wobei der Winkelbereich auf 250° beschränkt wurde. Der Winkelfehler, der in Figur 8 in einer deutlich feineren Skala gezeigt ist als in Figur 6, wird durch das längere Training sehr deutlich reduziert und zeigt, dass über die Trainingsdauer höhere Messgenauigkeiten erreichbar sind.

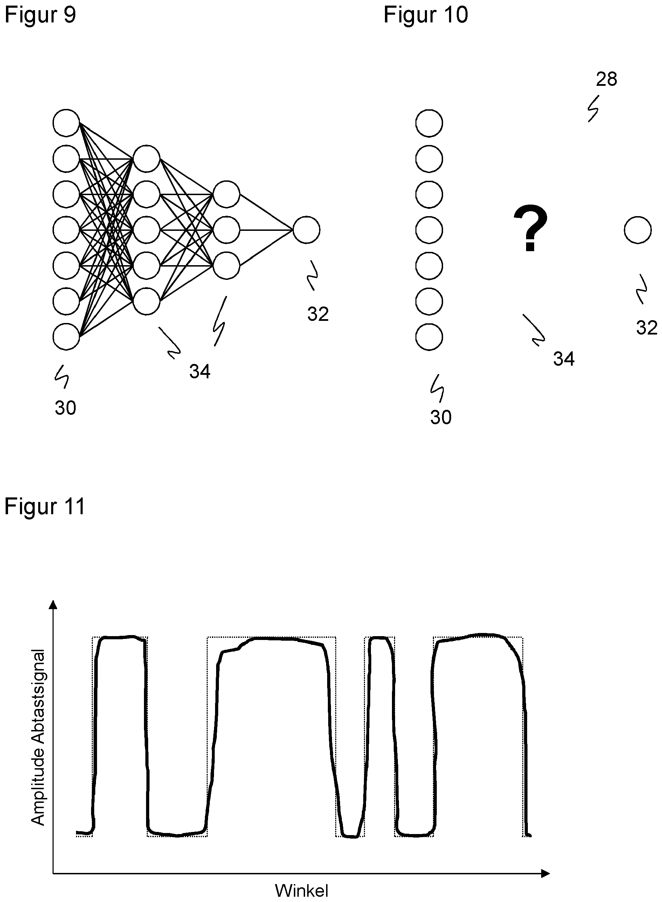

Figur 9 zeigt sehr schematisch eine Beispielarchitektur eines tiefen neuronalen Netzes 28 mit einer Eingangsschicht 30, einer Ausgangsschicht 32 und mehreren, hier zwei verborgenen Zwischenschichten 34. Wie in Figur 8 illustriert, lässt sich mit dieser vorgegebenen Architektur mit wenigen Zwischenschichten 34 bei Abtastsignalen mit einer Auflösung von zehn Bit durch mehr als 100.000 Trainingswiederholungen eine Genauigkeit von etwa 1° erreichen. Durch bessere Auflösung der Abtastsignale beispielsweise von zwanzig Bit und ein noch längeres Training sind auch Genauigkeiten <1° erreichbar, beispielsweise 120".

Figur 10 illustriert ein weiteres tiefes neuronales Netz 28, bei dem die Architektur zumindest teilweise nicht festgelegt ist. Dies kann als Teil des Trainings geschehen, oder es wird von Hand eine optimierte Architektur gesucht. Mit solchen Maßnahmen sind nochmals Verbesserungen der Bewertung durch das neuronale Netz 28 möglich.

Eine Gebervorrichtung 10 bestimmt typischerweise eine Winkel- oder Längsposition. Einige Ausführungsformen geben stattdessen oder zusätzlich Geschwindigkeit und/oder Beschleunigung aus. Diese kann analytisch durch Ableitung aus den Positionsinformationen des neuronalen Netzes 28 gewonnen werden, oder das neuronale Netz gibt sie selbst aus. Um hier noch bessere Messergebnisse zu erzielen, ist denkbar, ein Sensorprinzip zu wählen, das eine Geschwindigkeit oder Beschleunigung misst.

Beispielsweise wird durch ein induktives Sensorprinzip ein geschwindigkeitsproportionales Signal erzeugt. Für die direkte Messung der Beschleunigung gibt es ebenfalls Messverfahren, etwa Trägheitssensoren (IMU, intertial measurement unit). Besonders vorteilhaft ist eine Kombination mehrere Sensorprinzipien, die beispielsweise einmal die Position und einmal die Geschwindigkeit messen.

In einer weiteren vorteilhaften Ausführungsform geht der eigentlichen die Bewertung des neuronalen Netzes 28 eine Grobschätzung voraus. Beispielsweise wird eine Codespur 16 vorab mit einem klassischen Messverfahren ausgewertet und so bereits eine Grobschätzung erhalten. Das neuronale Netz 28 bewertet dann dieses Abtastsignal erneut und/oder weitere Abtastsignale, um die Grobschätzung zu verbessern. In einem Beispiel basiert die Grobschätzung auf einem digitalen Abtastsignal oder einem Abtastsignal mit wenigen Bit Auflösung, während das neuronale Netz 28 anschließend das analoge Abtastsignal beziehungsweise das in hoher Bittiefe gesampelte Abtastsignal bewertet. In einem anderen Beispiel sind mehrere Codespuren 16 vorgesehen. Die Grobschätzung nutzt eine dieser Codespuren 16 mit einem Zufallscode (PRC, Pseudo Random Code), und das neuronale Netz 28 bewertet Abtastsignale einer anderen Codespur 16 mit einem periodischen oder nicht-periodischen Signal, oder eine analoge Version des Abtastsignals der Codespur 16 mit dem Zufallscode. Es ist denkbar, dass das neuronale Netz 28 oder ein anderes Verfahren des maschinellen Lernens einschließlich eines weiteren neuronalen Netzes die Grobschätzung vornimmt.

Im praktischen Einsatz ist eine Gebervorrichtung 10 zahlreichen Umwelteinflüssen ausgesetzt. Dazu zählen Umweltbedingungen, wie Temperatur und Feuchtigkeit, und mechanische Einflüsse, wie Schock, Vibration oder zusätzliche Kräfte und Drehmomente. Solche Einflüsse können im Training berücksichtigt werden. Eine Möglichkeit ist, die zum Einlernen verwendeten Abtastsignale durch Simulation entsprechend den Umwelteinflüssen zu variieren. Ein alternatives oder ergänzendes Vorgehen ist ein Einlernen unter veränderlichen Umwelteinflüssen in einer typischen Anwendungssituation beispielsweise im Rahmen der Endfertigung oder sogar direkt am späteren Einsatzort.

In einer Ausführungsform wird das neuronale Netz 28 mit derartigen Einflussfaktoren über eine große Anzahl Gebervorrichtungen 10 schon vortrainiert. Dazu wird eine Art Standardnetz trainiert, das dann statt eines völlig untrainierten neuronalen Netzes 28 als Ausgangspunkt aufgespielt wird. Dem schließt sich dann vorzugsweise ein individuelles Training einer jeweiligen Gebervorrichtung 10 an. Das neuronale Netz 28 startet also bei einem individuellen Training nicht mit beliebigen Gewichten, sondern mit denjenigen des Vortrainings, so dass schon ein verbesserter Ausgangszustand hinsichtlich der diversen Einflussfaktoren erreicht ist. Bei dem individuellen Training wird die Gebervorrichtung 10 vorzugsweise optimierten Bewegungsszenarien mit bestimmten Orts-, Geschwindigkeits- und/oder Beschleunigungsprofilen ausgesetzt. Unter Umständen müssen Referenzmessungen mit weiteren Sensoren erfolgen, um die tatsächlichen kinematischen Parameter zu bestimmen. Daten aus dem individuellen Training und dem Betrieb können genutzt werden, um Trainingsszenarien beziehungsweise das Standardnetz im Laufe der Zeit für künftig einzulernende Gebervorrichtungen 10 weiter zu verbessern.

Bei einem Drehgeber gibt es spezifische Eigenarten wie Exzentrizität, Höhenschlag oder Kugellagereigenschaften. Diese werden erfindungsgemäß berücksichtigt, indem Trainingsdaten mit einer Bandbreite dieser Eigenarten variiert werden, gegebenenfalls in Kombination mit Variationen durch Umwelteinflüsse.

Figur 11 zeigt den Vergleich eines idealen und eines tatsächlichen Abtastsignals. Das tatsächliche Abtastsignal wird in der Realität nie dem idealen Abtastsignal entsprechen, sondern diverse Flanken, Übergänge, Ripples und dergleichen aufweisen. Für ein herkömmliches Verfahren sind solche Abweichungen nachteilig, da sie zusätzliche Fehler erzeugen. Soweit die Abweichungen zumindest teilweise reproduzierbar sind, stellen sie für ein Verfahren des maschinellen Lernens nur weitere Struktur dar, die ebenso zu einer verbesserten Bewertung beitragen wie absichtlich eingebrachte Strukturen.

## Patentansprüche

1. Gebervorrichtung (10) zur Bestimmung einer kinematischen Größe der Bewegung eines ersten Objekts relativ zu einem zweiten Objekt, wobei die Gebervorrichtung (10) eine mit dem ersten Objekt verbundene Maßverkörperung (14) und mindestens eine mit dem zweiten Objekt verbundene Abtasteinheit (18) zur Erzeugung mindestens eines Abtastsignals durch Erfassen der Maßverkörperung (14) sowie eine Steuer- und Auswertungseinheit (24) aufweist, die dafür ausgebildet ist, die kinematische Größe durch eine Bewertung des Abtastsignals mit einem Verfahren des maschinellen Lernens aus dem Abtastsignal zu bestimmen, wobei die Bewegung eine Drehbewegung der beiden Objekte zueinander ist, die durch eine Lagerung ermöglicht ist und wobei die Bewertung mit einer Vielzahl von Abtastsignalen und zugehörigen kinematischen Größen unter Variation von Exzentrizität, Höhenschlag und individuellen Eigenschaften der Lagerung trainiert ist.

2. Gebervorrichtung (10) nach Anspruch 1,
wobei die Steuer- und Auswertungseinheit (24) ein tiefes neuronales Netz (28) aufweist.

3. Gebervorrichtung (10) nach Anspruch 2,
wobei die Architektur des tiefen neuronalen Netzes (28) eine zumindest teilweise vorgegebene Architektur aufweist, insbesondere eine vorgegebene Anzahl Schichten und/oder Neuronen pro Schicht.

4. Gebervorrichtung (10) nach einem der vorhergehenden Ansprüche,
die mehrere Abtasteinheiten (18) mit unterschiedlichen Sensorprinzipien aufweist.

5. Gebervorrichtung (10) nach einem der vorhergehenden Ansprüche,
wobei mindestens eine Abtasteinheit (18) für ein Sensorprinzip ausgebildet ist, das direkt eine Geschwindigkeits- und/oder Beschleunigungsinformation erzeugt.

6. Gebervorrichtung (10) nach einem der vorhergehenden Ansprüche,
wobei die Maßverkörperung (14) für die Erzeugung eines nicht periodischen Musters ausgebildet ist.

7. Gebervorrichtung (10) nach einem der vorhergehenden Ansprüche,
wobei die kinematische Größe eine Drehstellung der beiden Objekte zueinander umfasst.

8. Gebervorrichtung (10) nach einem der vorhergehenden Ansprüche,
wobei die kinematische Größe eine Geschwindigkeit und/oder eine Beschleunigung umfasst.

9. Gebervorrichtung (10) nach einem der vorhergehenden Ansprüche,
wobei die Steuer- und Auswertungseinheit (24) für eine Vorabbestimmung einer Grobschätzung der kinematischen Größe ausgebildet ist, insbesondere mit einem Verfahren ohne maschinelles Lernen.

10. Gebervorrichtung (10) nach einem der vorhergehenden Ansprüche,
wobei die Steuer- und Auswertungseinheit (24) für eine Trainingsphase ausgebildet ist, in welcher die Gebervorrichtung (10) verschiedenen bekannten Bewegungsszenarien mit bekannten Orts-, Geschwindigkeits- und/oder Beschleunigungsprofilen ausgesetzt ist.

11. Gebervorrichtung (10) nach einem der vorhergehenden Ansprüche,
wobei die Bewertung unter Variation von Umgebungsbedingungen und/oder mechanischen Einflüssen trainiert ist, insbesondere Variation von Temperatur, Feuchtigkeit, Schockbelastung und/oder Vibration.

12. Gebervorrichtung (10) nach einem der vorhergehenden Ansprüche,
wobei der Steuer- und Auswertungseinheit (24) eine teiltrainierte Bewertung vorgegeben ist, die für eine Klasse von Gebervorrichtungen trainiert ist.

13. Gebervorrichtung (10) nach Anspruch 12,
wobei die Steuer- und Auswertungseinheit (24) dafür ausgebildet ist, die teiltrainierte Bewertung individuell nachzutrainieren.

14. Verfahren zur Bestimmung einer kinematischen Größe eines ersten Objekts relativ zu einem zweiten Objekt, wobei mit dem ersten Objekt eine Maßverkörperung (14) und mit dem zweiten Objekt mindestens eine Abtasteinheit (18) zur Erzeugung mindestens eines Abtastsignals durch Erfassen der Maßverkörperung (14) verbunden ist und wobei durch eine Bewertung des Abtastsignals mit einem Verfahren des maschinellen Lernens die kinematische Größe bestimmt wird, wobei die Bewegung eine Drehbewegung der beiden Objekte zueinander ist, die durch eine Lagerung ermöglicht ist, und wobei die Bewertung mit einer Vielzahl von Abtastsignalen und zugehörigen kinematischen Größen unter Variation von Exzentrizität, Höhenschlag und individuellen Eigenschaften der Lagerung trainiert wird.

15. Verfahren nach Anspruch 14,
wobei eine teiltrainierte Bewertung vorgegeben ist, die für eine Klasse von Gebervorrichtungen trainiert ist, und wobei insbesondere die teiltrainierte Bewertung individuell nachtrainiert wird.

## Claims

1. An encoder device (10) for determining a kinematic quantity of the movement of a first object relative to a second object, the encoder device (10) comprising a measuring standard (14) connected to the first object and at least one sensing unit (18) connected to the second object for generating at least one sensing signal by sensing the measuring standard (14), and a control and evaluation unit (24) configured to determine the kinematic quantity from the sensing signal by evaluating the sensing signal with a machine learning method, wherein the movement is a rotational movement of the two objects relative to each other enabled by a bearing, and wherein the evaluation is trained with a plurality of sensing signals and associated kinematic quantities with variation of eccentricity, radial runout and individual properties of the bearing.

2. The encoder device (10) according to claim 1,
wherein the control and evaluation unit (24) comprises a deep neural network (28).

3. The encoder device (10) according to claim 2,
wherein the architecture of the deep neural network (28) has an at least partially predetermined architecture, in particular a predetermined number of layers and/or neurons per layer.

4. The encoder device (10) according to any of the preceding claims,
comprising a plurality of sensing units (18) having different sensing principles.

5. The encoder device (10) according to any of the preceding claims,
wherein at least one sensing unit (18) is configured for a sensing principle that directly generates velocity and/or acceleration information.

6. The encoder device (10) according to any of the preceding claims,
wherein the measuring standard (14) is configured to generate a non-periodic pattern.

7. The encoder device (10) according to any of the preceding claims,
wherein the kinematic quantity comprises a rotational position of the two objects relative to each other.

8. The encoder device (10) according to any of the preceding claims,
wherein the kinematic quantity comprises a velocity and/or an acceleration.

9. The encoder device (10) according to any of the preceding claims,
wherein the control and evaluation unit (24) is configured for predetermining a rough estimate of the kinematic quantity, in particular with a method without machine learning.

10. The encoder device (10) according to any of the preceding claims,
wherein the control and evaluation unit (24) is configured for a training phase in which the encoder device (10) is subjected to various known motion scenarios with known location, speed and/or acceleration profiles.

11. The encoder device (10) according to any of the preceding claims,
wherein the evaluation is trained under variation of environmental conditions and/or mechanical influences, in particular variation of temperature, humidity, shock load and/or vibration.

12. The encoder device (10) according to any of the preceding claims,
wherein the control and evaluation unit (24) is given a partially trained evaluation trained for a class of encoder devices.

13. The encoder device (10) according to claim 12,
wherein the control and evaluation unit (24) is configured to individually re-train the partially trained evaluation.

14. A method for determining a kinematic quantity of a first object relative to a second object, wherein a measuring standard (14) is connected to the first object and at least one sensing unit (18) is connected to the second object for generating at least one sensing signal by sensing the measuring standard (14), and wherein the kinematic quantity is determined by evaluating the sensing signal with a machine learning method, wherein the motion is a rotational motion of the two objects relative to each other enabled by a bearing, and wherein the evaluation is trained with a plurality of sensing signals and associated kinematic quantities with variation of eccentricity, radial runout and individual characteristics of the bearing.

15. The method according to claim 14,
wherein a partially trained evaluation is predetermined that is trained for a class of encoder devices, and wherein in particular the partially trained evaluation is individually re-trained.

## Revendications

1. Dispositif de codage (10) pour déterminer une grandeur cinématique du mouvement d'un premier objet par rapport à un second objet, le dispositif de codage (10) comprenant un étalon de mesure (14) connecté au premier objet et au moins une unité de détection (18) connectée au second objet pour générer au moins un signal de détection en détectant l'étalon de mesure (14), et une unité de commande et d'évaluation (24) configurée pour déterminer la grandeur cinématique à partir du signal de détection en évaluant le signal de détection avec une procédé d'apprentissage automatique, dans lequel le mouvement est un mouvement de rotation des deux objets l'un par rapport à l'autre activé par un palier, et dans lequel l'évaluation est entraînée avec une pluralité de signaux de détection et de grandeurs cinématiques associées avec une variation de l'excentricité, du battement radial et des caractéristiques individuelles du palier.

2. Dispositif de codage (10) selon la revendication 1,
dans lequel l'unité de commande et d'évaluation (24) comprend un réseau neuronal profond (28).

3. Dispositif de codage (10) selon la revendication 2,
dans lequel l'architecture du réseau neuronal profond (28) comprend une architecture au moins partiellement prédéterminée, en particulier un nombre prédéterminé de couches et/ou de neurones par couche.

4. Dispositif de codage (10) selon l'une des revendications précédentes,
comprenant une pluralité d'unités de détection (18) ayant des principes de détection différents.

5. Dispositif de codage (10) selon l'une des revendications précédentes,
dans lequel au moins une unité de détection (18) est configurée pour un principe de détection qui génère directement des informations de vitesse et/ou d'accélération.

6. Dispositif de codage (10) selon l'une des revendications précédentes,
dans lequel l'étalon de mesure (14) est configuré pour générer un motif non périodique.

7. Dispositif de codage (10) selon l'une des revendications précédentes,
dans lequel la grandeur cinématique comprend une position en rotation des deux objets l'un par rapport à l'autre.

8. Dispositif de codage (10) selon l'une des revendications précédentes,
dans lequel la grandeur cinématique comprend une vitesse et/ou une accélération.

9. Dispositif de codage (10) selon l'une des revendications précédentes,
dans lequel l'unité de commande et d'évaluation (24) est configurée pour prédéterminer une estimation grossière de la grandeur cinématique, notamment avec un procédé sans apprentissage automatique.

10. Dispositif de codage (10) selon l'une des revendications précédentes,
dans lequel l'unité de commande et d'évaluation (24) est configurée pour une phase d'entraînement dans laquelle le dispositif de codage (10) est soumis à différents scénarios de mouvement connus avec des profils de localisation, de vitesse et/ou d'accélération connus.

11. Dispositif de codage (10) selon l'une des revendications précédentes,
dans lequel l'évaluation est entraînée en fonction de la variation des conditions environnementales et/ou des influences mécaniques, en particulier la variation de la température, de l'humidité, des chocs et/ou des vibrations.

12. Dispositif de codage (10) selon l'une des revendications précédentes,
dans lequel une évaluation partiellement entraînée est prédéfinie pour l'unité de commande et d'évaluation (24) qui est entraînée pour une classe de dispositifs de codage.

13. Dispositif de codage (10) selon la revendication 12,
dans lequel l'unité de commande et d'évaluation (24) est configurée pour réentraîner individuellement l'évaluation partiellement entraînée.

14. Procédé pour déterminer une grandeur cinématique d'un premier objet par rapport à un second objet, dans lequel un étalon de mesure (14) est connecté au premier objet et au moins une unité de détection (18) est connectée au second objet pour générer au moins un signal de détection en détectant l'étalon de mesure (14), et dans lequel la grandeur cinématique est déterminée en évaluant le signal de détection avec un procédé d'apprentissage automatique, dans lequel le mouvement est un mouvement de rotation des deux objets l'un par rapport à l'autre, activé par un palier, et dans lequel l'évaluation est entraînée avec une pluralité de signaux de détection et de grandeurs cinématiques associées avec une variation de l'excentricité, du battement radial et des caractéristiques individuelles du palier.

15. Procédé selon la revendication 14,
dans lequel une évaluation partiellement entraînée est prédéterminée qui est entraînée pour une classe de dispositifs de codage, et dans lequel en particulier l'évaluation partiellement entraînée est réentraînée individuellement.
